# EUROPEAN PATENT APPLICATION

(11) **EP 2 799 696 A2**
(43) Date of publication of application: **05.11.2014**
(21) Application number: 14166231.2
(22) Date of filing: 28.04.2014
(51) Int. Cl.: F02D 41/00, F02D 41/30, F02D 23/02, F02D 41/40, F02B 37/007

(54) **Engine control apparatus**

(30) Priority: 02.05.2013 JP 2013097101; 17.03.2014 JP 2014053536
(71) Applicant: Applied Electronics Corporation, Tama-ku Kawasaki-City Kanagawa 214-0023 (JP)
(72) Inventor: Tomonari, Kengo, Kawasaki-City, Kanagawa 214-0023 (JP); Shoji, Kazuichi, Kawaski-City, Kanagawa 214-0023 (JP); Iwamoto, Hironori, Kawasaki-City, Kanagawa 214-0023 (JP)
(74) Representative: Klunker . Schmitt-Nilson . Hirsch

(57) **Abstract**

[Problem]

An object of the present invention is to provide an engine control apparatus, wherein rotational speeds of compressors of respective cylinders are detected, detected rotational speeds are respectively compared with a reference value, then combustion inter-cylinder differences of the engine are obtained, and intake system controlfactors,exhaustsystem controlfactorsorinjection control factors are controlled so as to decrease or lose the combustion inter-cylinder differences.

[Means for solving the problem]

The present invention is an engine control apparatus which comprises plural cylinders, and turbo chargers respectively having compressor are provided at the each cylinder, which controls an engine with an ECU for engine control, comprising: turbo sensors detecting speed of compressors for the respective cylinders; and a comparison control section comparing the speed with a reference value for the respective cylinders and obtaining combustion inter-cylinder differences.

## Description

### Technical Field

The present invention relates to an engine (internal combustion engine) control apparatus comprising plural cylinders respectively having a turbo charger, and in particular to an engine control apparatus, wherein rotational speeds (simultaneous or integrating) of compressors (vanes, blades) of respective cylinders are detected, detected rotational speeds are respectively compared with a reference value, then combustion inter-cylinder differences of the engine are obtained, and intake control factors, exhaust control factors or injection control factors are controlled so as to decrease or lose the combustion inter-cylinder differences.

### Background Art

In an engine (internal combustion engine) for automobile use etc., an output of the engine relates to the mass of air that can be provided to the engine for combustion and the proportionate amount of fuel, in the case of improving the output of the internal combustion engine, more combustion air and more fuel have to be supplied.

A turbocharger is known as a super charger provided in the engine for realizing output improvement etc. without growing in size. The turbocharger is mainly comprised of a fluid compressor and a turbine, and the fluid compressor and the turbine are connected by a common shaft and rotate in the same number of revolutions. The turbine converts energy of exhaust gas that generally disappears without being used into rotational energy and drives the compressor. The compressor sucks fresh air in and feeds pre-compressed air to each cylinder of the engine by pressure. The amount of fuel that is increased can be supplied to the mass of more air within the cylinder. In this way, the internal combustion engine can emit more output.

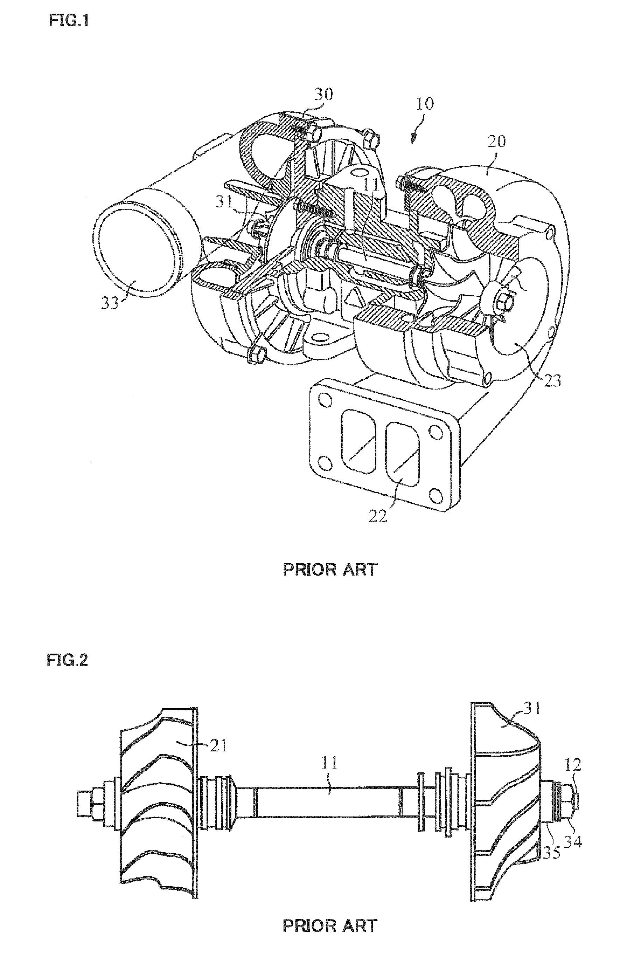

FIG.1 shows one constructional example of a general turbocharger 10 that comprises a turbine 20 and a compressor 30. As shown in FIG.1, within the compressor 30, a compressor wheel 31 is rotatably borne and connected to a turbo shaft 11. The turbo shaft 11 is also rotatably borne, and the other end of the turbo shaft 11 is connected to a turbine wheel 21. By high-temperature exhaust gas being made to flow into the turbine 20 from the internal combustion engine (not shown) via a turbine entrance 22, the turbine wheel 21 rotates. A stream of the exhaust gas flows out from the turbine 20 through a turbine exit 23. Since the turbine wheel 21 is connected to the compressor wheel 31 via the turbo shaft 11, in this way, the turbine 20 drives the compressor 30. Within the compressor 30, air is sucked in through an air entrance 32, compressed, and supplied to the internal-combustion engine via an air exit 33.

FIG.2 shows a connection relationship among the turbine wheel 21, the turbo shaft 11 and the compressor wheel 31, and the turbine wheel 21 is generally comprised of heat-resisting austenitic nickel compounds. The turbine wheel 21 is manufactured by precision casting, and connected to the turbo shaft 11 that is generally comprised of heat-treated steel by such a method as friction welding method. A component part that is comprised of the turbine wheel 21 and the turbo shaft 11, is called as "a rotor" or "rotational body". For example, the compressor wheel 31 is made of aluminum alloys by means of precision casting etc.. The compressor wheel 31 is fixed on an end portion 12 of the compressor side of the turbo shaft 11 by a fixing element 34. For example, a hexagon cap nut 35 can use as the fixing element 34. The hexagon cap nut 35 firmly fastens the turbine wheel 21 with respect to a turbo shaft collar by means of a seal bush, a bearing collar and a spacer bush. Therefore, the rotational body forms a hard unit with the compressor wheel 31.

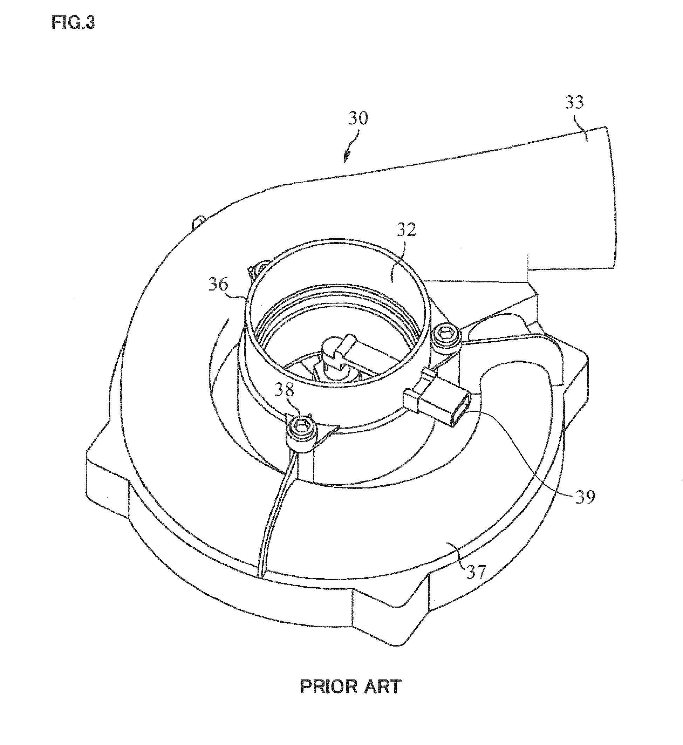

FIG.3 shows the compressor 30 that comprises the air entrance 32 and the air exit 33, and a cylindrical adapter 36 is disposed on the air entrance 32. The cylindrical adapter 36 is connected to a spiral compressor housing 37 for example by means of a screw 38. Further, a rotation detector 39 for detecting a rotation number of the compressor 30 is provided.

### The List of Prior Art Documents

### Patent Documents

Patent Document 1: Japanese Published Unexamined Patent
   Application No.2012-189058 A
Patent Document 2: Japanese Published Unexamined Patent
   Application No.2012-237255 A

### Summary of the Invention

In an engine of automobile etc., a multi-cylinder engine having plural cylinders is used for purposes of smoothing of the rotation and a high output capacity. A turbocharger is also proposed as a super charger for realizing output improvement etc. without growing in size. In the above multi-cylinder engine with the turbocharger, a turbo rotation is limited a t a high land or a feedback of an opening adjustment of turbo vanes of VGT (Variable-Geometry Turbocharger) is performed.

Conventionally, for example deviation (unevenness) of an injection amount depending on production of a common rail is not known in advance, a target deviation value of exhaust gas conformity of the engine is set by extracting considerable samples (generally, A-samples, B-samples and C-samples) after mass production. However, in this method called as a master engine system, it is impossible to get an engine-conformity including deviation of the injection system, and it greatly influences to the deviation of engine exhaust and performance difference for an engine unit. Manufacturer shoulders DF (Deterioration Factor) which is important to the emission regulation by including the deterioration and the deviation to the injection system, and it has been a great shoulder on labor and cost for the manufacturer. This is performed by a means for correcting the injection amount at a specific process point by using QR code or the like. However, the number does not merely fill up 30 points of an engine use region, and it does not influence to few thousands points that an engine control map has and therefore "Q-drift" due to the production is not basically dissolved. Since the injection control factors (injection amount, injection timing, injection number) are unambiguously determined for the engine torque, when the injection amount changes, a generation torque of the engine also changes and the change greatly and directly influences to the engine performance.

This problem greatly influences to a basic performance such as a case that combustion heat greatly changes in using time of bio-fuel in the automobile, a rated point output changes in a general purpose engine, and progress property of a ship is changes in the marine use. Thus, there is provided a process to match the output in the manufacturing line, and the cost and the labor go up. Further, there is a problem not to get a robustness relating to the exhaust because of enlarging an error of EGR (Exhaust Gas Recycle) to control for the torque.

The present invention has been developed in view of the above described circumstances, and an object of the present invention is to provide an engine control apparatus, wherein rotational speeds (simultaneous or integrating) of compressors (vanes, blades) of respective cylinders are detected, detected rotational speeds are respectively compared with a reference value, then combustion inter-cylinder differences of the engine are obtained, and intake system control factors, exhaust system control factors or injection control factors are controlled so as to decrease or lose the combustion inter-cylinder differences.

The present invention relates to an engine control apparatus which comprises plural cylinders, and turbo chargers respectively having compressor sections are provided at said every cylinders, which controls an engine with an ECU (electronic control unit) for engine control, the above-described object of the present invention is achieved by comprising turbo sensors detecting a simultaneous speed or an integrating speed of compressors of said compressor sections for said respective cylinders and outputting rotational signals; and a comparison control section comparing said simultaneous speed or integrating speed with a reference value for said respective cylinders and obtaining combustion inter-cylinder differences of said engine.

The above-described object of the present invention is more effectively achieved by that, wherein judgments for said cylinders are performed with a crank angle from a crank angle sensor connected to a crank shaft, or wherein further comprising a control means controls intake system control factors, exhaust system control factor or injection control factors for said engine based on comparison results for said respective cylinders obtained by said comparison control section, and thereby to control so as to decrease or lose said combustion inter-cylinder differences, or wherein said injection control factors are at least an injection amount, an injection timing and an injection number, or wherein there is provided a correction section for correcting said reference value corresponding to a control of said control means.

Further, the present invention relates to an engine control apparatus which comprises plural cylinders, turbo chargers respectively having compressor sections are provided at said every cylinders and controls an engine with an ECU (electronic control unit) for engine control, the above-described object of the present invention is achieved by comprising turbo sensors detecting rotational speeds of said compressor sections for said respective cylinders and outputting turbo signals; counters counting said turbo signals for said respective cylinders; and a comparison control section comparing counted values of said counters with a reference value for said respective cylinders and controlling at least one factor of injection control factors; and thereby to control so as to decrease or lose combustion inter-cylinder differences of said engine.

The above-described object of the present invention is more effectively achieved by that, wherein judgments for said cylinders are performed with a crank angle from a crank angle sensor connected to a crank shaft, or wherein said injection control factors are an injection amount, an injection timing and an injection number, or wherein said injection amount is decreased when said counted value is greater than said reference value, and said injection amount is increased when said counted value is smaller than said reference value, or wherein said injection timing is delayed when said counted value is greater than said reference value, and said injection timing is advanced when said counted value is smaller than said reference value, or wherein said injection number is decreased when said counted value is greater than said reference value, and said injection number is increased when said counted value is smaller than said reference value, or wherein said injection amount is decreased, said injection timing is delayed and said injection number is decreased when said counted value is greater than said reference value, and said injection amount is increased, said injection timing is advanced and said injection number is increased when said counted value is smaller than said reference value, or wherein there is provided a correction section for respectively calculating differences between said counted values and correcting said reference value corresponding to said differences.

### Effects of the Invention

According to an engine control apparatus of the present invention, since the rotation of the compressor (wheels, vanes) of the compressor section for respective cylinders is detected (simultaneous, integrating) with a pulse shape turbo signal and the detected values are compared with a reference value (threshold), it is easy possible to obtain the combustion inter-cylinder differences based on the comparison results of respective cylinders for the reference value. In this way, it is simply possible to secure the deviation of the engine performance and to feed back to the engine manufacturing process.

Moreover, based on the obtained combustion inter-cylinder differences, it is possible to lose or suppress (decrease) the combustion inter-cylinder differences by controlling, at least, the intake system control factors, the exhaust system control factors or the injection control factors (injection amount, injection timing, injection number). Accordingly, it is possible to unify the combustion inter-cylinder differences and performances of the engine. Further, it is possible to compensate the deviation of the engine system for the torque, to minimize the deviation of the engine performance and to minimize the exhaust deviation of the engine system for the torque.

Furthermore, in the common rail system which is used in the direct injection within the cylinders of the diesel engine and the gasoline engine, according to the present invention, it is easy possible to determine cases that the injector cannot work due to a mechanical failure or the fuel continuously flows due to a mechanical fixing such as needle stick. Therefore, the present invention has a benefit to apply irrespective of the injection type of "Euro-6 OBD Regulation" desired by European regulation, or without providing a specific detecting means on the common rail.

### Brief Description of the Drawings

In the accompanying drawings:
FIG. 1 is a partial cross-section structure diagram showing one constructional example of a general turbocharger;
FIG.2 is a structure diagram showing a connection relationship among a turbine wheel, a turbo shaft and a compressor wheel;
FIG.3 is a perspective diagram showing one example of a compressor that comprises an air entrance and an air exit;
FIG.4 is a characteristic diagram showing one example of a relation between the engine speed and the torque with parameters of the turbo speed;
FIG.5 is a characteristic diagram showing one example of a relation between the exhaust pressure wave and the turbo speed with FFT (Fast Fourier Transform) analysis;
FIG.6 is a schematic diagram roughly showing a structure of the present invention;
FIG.7 is a block diagram showing one example of a calculating/processing section according to the present invention;
FIG.8 is a perspective diagram showing an installation structure of a turbo sensor according to the present invention;
FIG. 9 is a cross-section diagram showing the installation structure of the turbo sensor according to the present invention;
FIG. 10 is a part of a flowchart showing one example operation of the present invention;
FIG. 11 is a part of a flowchart showing one example operation of the present invention;
FIG.12 is a waveform diagram showing one example of the output wave of the turbo sensor;
FIG.13 is a timing chart showing one example of operation of the present invention;
FIG.14 is a characteristic diagram showing the effect of the present invention; and
FIG. 15 is a timing chart showing one operation of the present invention.

### Mode for Carrying Out the Invention

The present invention, by simultaneously or integrally detecting rotation speeds (rotation numbers) of the turbochargers (compressors), detects combustion inter-cylinder differences of the engine and controls an injection amount, an injection timing, an injection number of fuel injection control factors, DPF (Diesel Particulate Filter), intake system control factors, exhaust system control factors based on the combustion inter-cylinder differences for respective cylinders. The compressor speed or simultaneous speed by using the turbo sensor corresponds to exhaust energy on the thermodynamics of the engine and quantity of heat Q2 of Sabathe cycle (complex cycle) which is a kind of non-reversible heat cycle. Thus, it is possible to directly measure the quantity of heat Q2 for each cylinder by counting or integrating simultaneous speed of the turbo. Since a format with "turbo simultaneous speed = rotational energy" which is the quantity of heat Q2 being combustion results among the cylinders is obtained, it is possible to measure the injection amount, the exhaust temperature and so on for each cylinder.

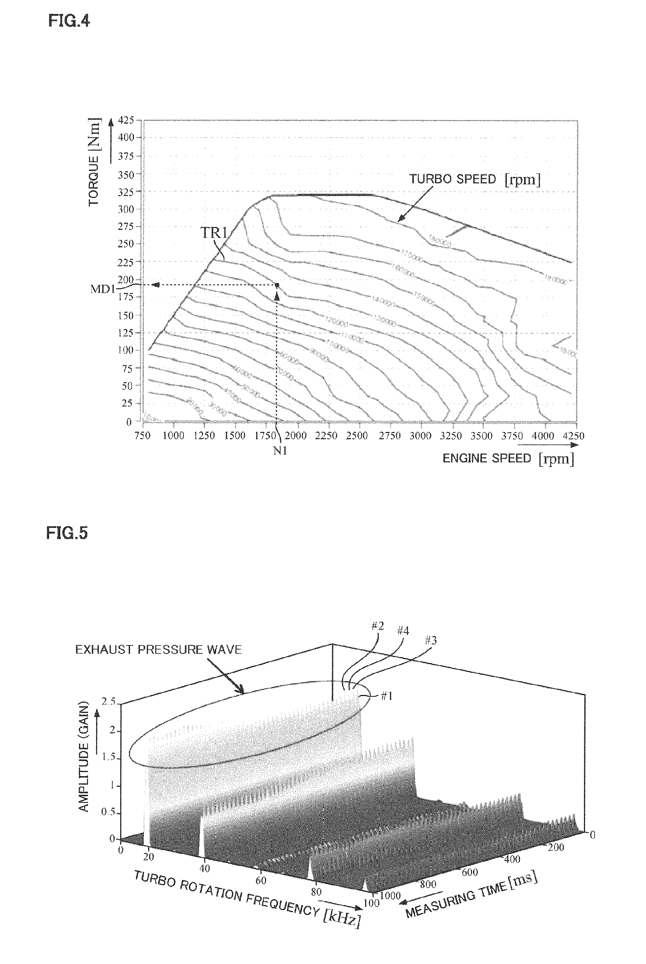

FIG.4 shows an example of a relation (map values) between the engine speed N (1/min) and the torque MD (Nm) with parameters of the turbo speed (rpm). For example, the torque MD becomes MD1 (Nm) in a case that the engine speed N is "N1 (1/min)" and the turbo speed is "13000 (rpm)" as shown by arrow lines in FIG.4. In this way, it is possible to unambiguously detect the engine torque due to the map values when the engine speed N (1/min) and the turbo speed (rpm) are determined. Based on the unambiguous relation of the engine speed N (1/min) and the torque MD (Nm) shown in FIG.4, being different from that an operation state of the turbo-self and the deterioration are merely judged by a turbo average speed, it is possible to easy failure-judge whether or not the operation state of the turbo-self and the deterioration are caused by the injection system, the turbochargers or the engine side. Therefore, the application field such as serviceability improvement, failure cause judgment, a fail-safe system and so on much more enlarges in comparison with the conventional field.

FIG. 5 is a characteristic diagram showing, with amplitude (gain), a relation between the exhaust pressure wave and the turbo speed with FFT (Fast Fourier Transform) analysis, and the exhaust pressure wave shows exhaust energy due to combustion result for each cylinder (order of #1, #3, #4, #2). From FIG.5, it is understood that the combustion state for each cylinder of the engine is continuously capable of detecting if the turbo rotational speed is measured.

Accordingly, the present invention measures the rotation of the turbocharger for each cylinder, obtains counted values or integrated values at one cycle for respective cylinders and compares the obtained values with a predetermined reference value (threshold). Based on the results of the comparison, the combustion inter-cylinder differences of the engine are obtained. Thus, it is possible to easily secure the deviation of the engine performance and to feed back to an engine manufacturing process.

Further, the present invention controls or changes intake system control factors, exhaustsystem controlfactorsorinjection control factors of the engine based on the above results and decrease or lose the combustion inter-cylinder differences. For example, the injection amount is decreased, the injection timing is delayed or the injection number is decreased when the counted value is greater than the reference value, and the injection amount is increased, the injection timing is advanced or the injection number is increased when the counted value is smaller than the reference value. In this way, it is possible to lose, or decrease, or suppress the combustion inter-cylinder differences of the engine.

As mentioned above, since the present invention performs the counting of the turbo rotation signal for each cylinder and feed backs to increase/decrease, for example the injection amount which is one of the injection control factors so as to complete the counting values with an arbitrary threshold, it is possible to correct the injection amount for the torque within whole operation range irrespective of map points of a voluntary engine operation range or map grid numbers. Therefore, according to the present invention, it is possible to greatly decrease the injection system deviation due to the manufacturing factors, and the robustness much more progresses.

Furthermore, since the present invention integrates the difference between the counted values for each cylinder and the reference value and corrects the reference value corresponding to the integrated value of the difference, the engine control which more accurately conforms to the conditions is realized.

Hereinafter, embodiments of the present invention will be described in detail with reference to the accompanying drawings.

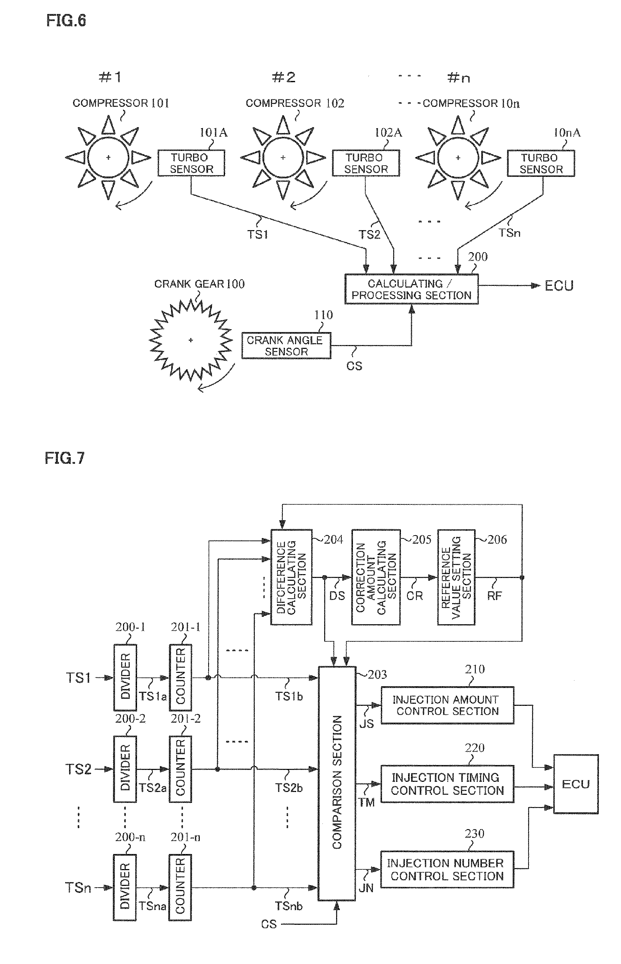

FIG. 6 roughly shows a structure of the present invention, cylinder number of the engine is "n (#1-#n, "n" is integer and equal to or more 2)". Compressors 101, 102,---, 10n are provided for each cylinder, turbo sensors 101A, 102A, ---, 10nA of in-contact or non-contact for detecting rotational speeds (rotation number) of the compressors 101, 102, ---, 10n are provided and turbo signals TS1 to TSn detected by the turbo sensors 101A,102A,---,10nA are inputted into a calculating/processing section 200 comprising a CPU and so on. Further, the engine has a crank shaft being connected to cylinders on respective cylinder bodies, a crank gear 100 is mounted on the crank shaft, and a crank angle sensor 110 for detecting crank angle CS by using cocave/covex portions or the like of tooth of the crank gear 100 is provided. The crank angle CS is inputted to the calculating/processing section 200, the calculating/processing section 200 controls the engine via the ECU (Electronic Control Unit) for engine control.

The construction of the calculating/processing section 200 is shown in FIG. 7, there are provided dividers 200-1 to 200-n, counters 201-1 to 201-n for respectively counting divided signals TS1a to TSna, a comparison section 203 for inputting the counted values TS1b to TSnb of the counters 201-1 to 201-n as well as inputting a reference value RF and the crank angle CS. Furthermore, the dividers 200-1 to 200-n are used to make high speed pulses become coarse and it is not always necessary, and the counters 201-1 to 201-n may directly count the turbo signals TS1 to TSn.

Further, a reference value setting section 206 for setting the reference value RF being the threshold is provided, and a difference calculating section 204 for calculating the difference between the counted values TS1b to TSnb in the counters 201-1 to 201-n and the reference value RF. The difference signal DS calculated in the difference calculating section 204 is inputted to a correction amount calculating section 205, the correction amount calculating section 205 calculates a correction amount CR in accordance with a predetermined equation and corrects the reference value RF of the reference value setting section 206 in accordance with the correction amount CR.

The comparison section 203 comparers, at level, the counted values TS1b to TSnb of the respective cylinders with the reference value RF corresponding to the crank angle CS. Based on the comparison results, the comparison section 203 inputs an injection amount control signal JS to an injection amount control section 210 to increase/decrease the injection amount of the fuel, does an injection timing control signal TM to an injection timing control section 220 to advance/delay the injection timing of the firing, and does an injection number control signal JN to an injection number control section 230 to increase/decrease the injection number of the injection number. The injection amount control section 210, the injection timing control section 220 and the injection number control section 230 respectively control the fuel injection amount, the firing timing and the injection number of the engine via the ECU. The control of the injection number is able to apply to the engine having a multi-injection function such as a pre-injection, a pilot-injection, a main-injection, a post injection.

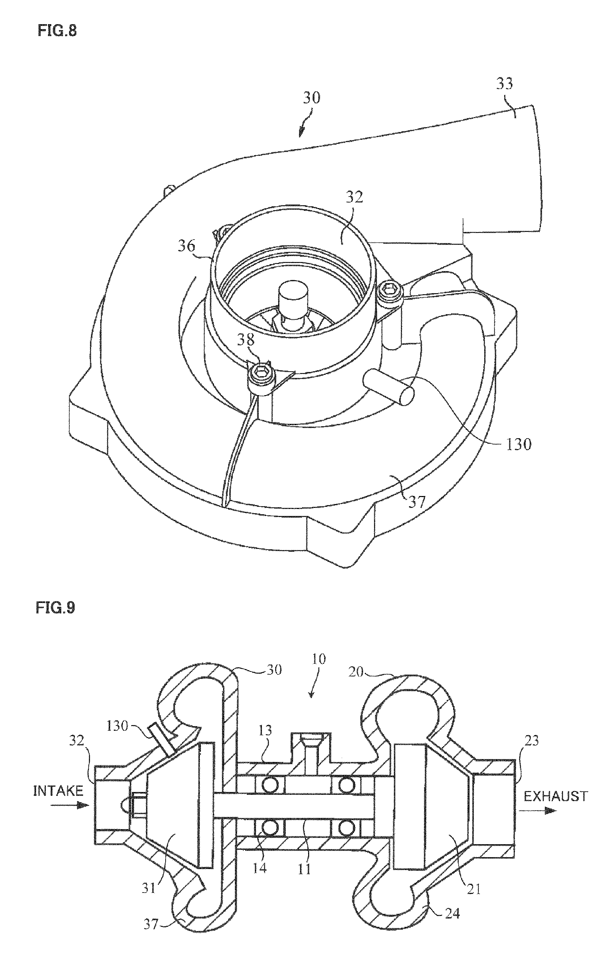

FIG.8 and FIG. 9 show an installation structure example of a turbo sensor 130 of a non-contact type which is mounted in the compressor 30 of the turbocharger. The compressor 30 of the turbocharger is equipped with the turbo sensor 130 as shown in FIG.8 and FIG.9. That is, the air entrance 32 of the compressor 30 is equipped with the turbo sensor 130 so that the turbo sensor 130 is located on the opposite side of the rotational plane of the blade (vanes) of the compressor wheel 31. With respect to equipping with the turbo sensor 130, for example, it can be achieved by opening a given hole in the neighborhood of the air entrance 32 of the compressor 30, and fitting the outer bushing 120 of the turbo sensor 130 into the given hole, or screwing with them, or fixing them by welding. The turbo sensor 130 is a sensor disclosed in Japanese Patent Application No. 2012-522305 (Patent Application No.12728361.2 in Europe).

As shown in FIG.9, the turbocharger 10 comprises a turbine 20 that is rotary driven by an exhaust gas stream of the engine, a compressor 30 that pressurizes incoming air that is rotary driven by revolutions of the turbine 20, and a turbo shaft 11 that connects the turbine 20 and the compressor 30. Further, a bearing 14 that rotatably bears the turbo shaft 11 in the radial direction, is housed within a housing 13. The turbine 20 comprises a turbine wheel 21 having a plurality of turbine blades and a turbine housing 24 that is a portion housing the turbine wheel 21 within the housing 13. Further, the compressor 30 comprises a compressor wheel 31 having a plurality of compressor blades (for example, 5 ∼ 12 compressor blades) and a compressor housing 37 that is a portion housing the compressor wheel 31 within the housing 13. The turbo sensor 130 passes through the compressor housing 37 and is equipped with by fitting into, screwing with or welding, and the sensor top of the turbo sensor 130 is equipped with so as to get closer to the rotational plane of the blade. Then, when the turbine wheel 21 revolves by the exhaust gas, the compressor wheel 31 revolves with the turbo shaft 11, air sucked in an intake passage within the compressor housing 37 is pressurized and compressed, and the compressed air is shot into a combustion chamber.

Moreover, the turbo sensor 130 may use a non-contact type sensor such as an eddy current type, an electrostatic type or a magnetic type.

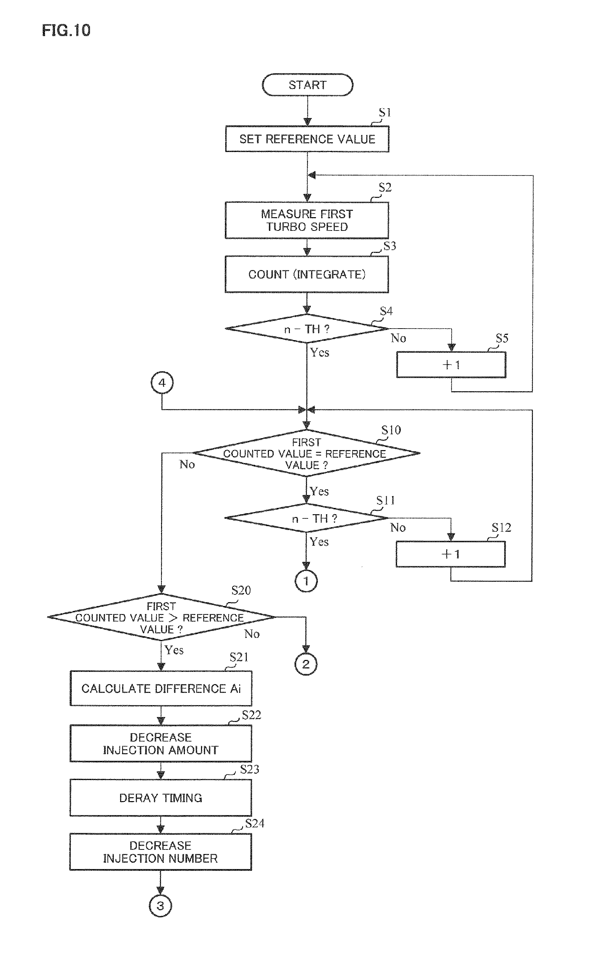

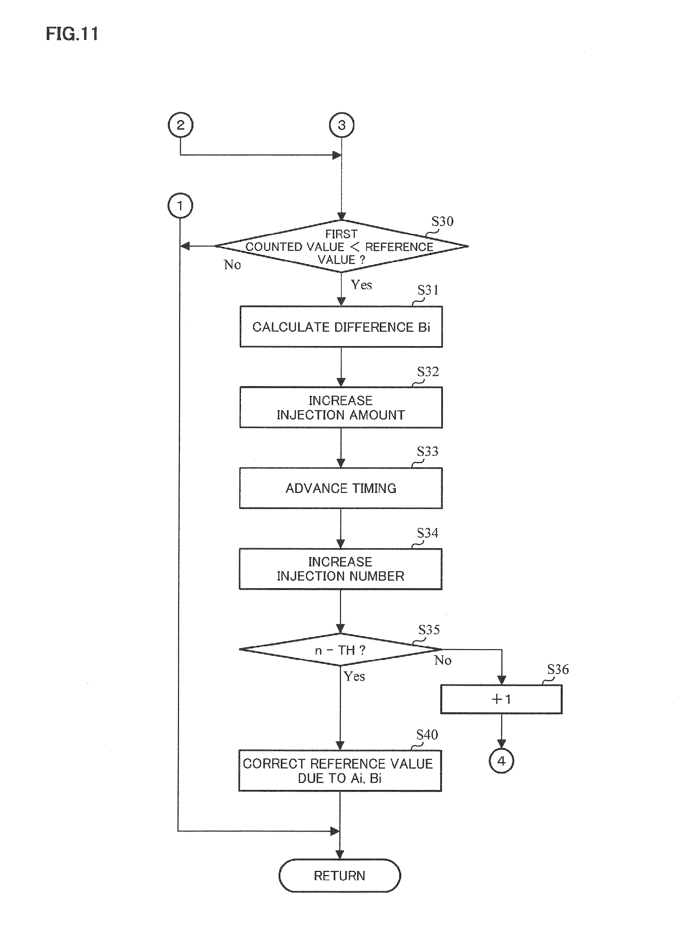

In such a configuration, an operation example of the present invention will be described with reference to flow charts of FIG.10 and FIG.11.

When the operation is started, firstly the reference value setting section 206 sets the reference value RF and inputs the set reference value RF to the comparison section 203 and the difference calculating section 204 (Step S1). The speed (rotation) of the compressor 101 of the cylinder #1 is measured by the turbo sensor 101A (Step S2), the turbo signal TS1 from the turbo sensor 101A is divided at the divider 200-1 (Step S3), and the divided turbo signal TS1a is counted at the counter 201-1 (Step S4). Then, the cylinder number is counted up ("+1") when the counting operation of the cylinder is completed (Step S5), and the above operations are repeated until the cylinder becomes "#n" (Step S4).

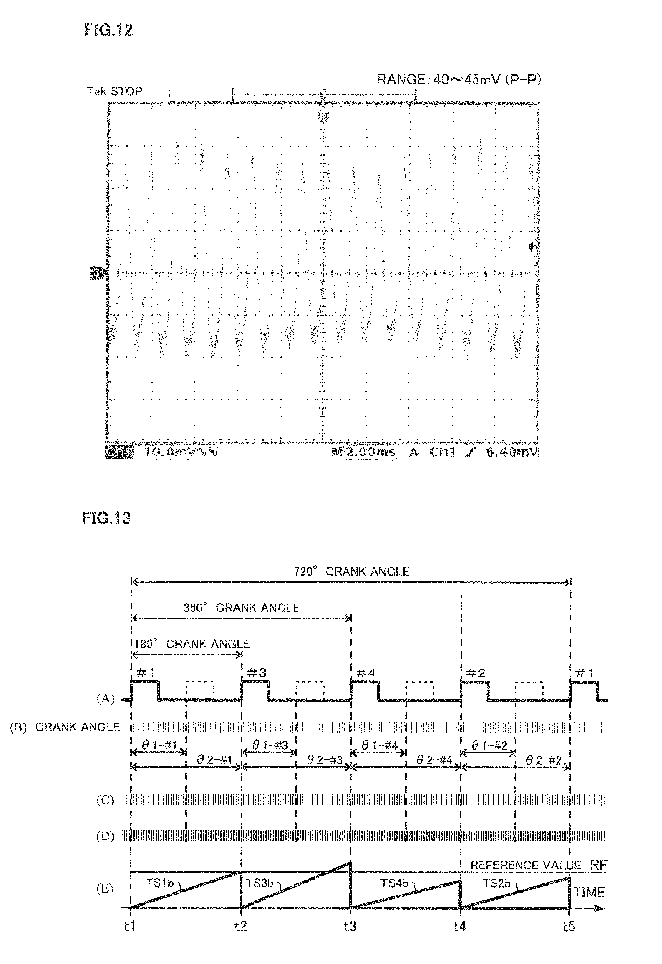

The turbo signals TS1 to TSn are wave shapes as shown in FIG.12 with range 40 ∼ 45 mV(P-P), and the dividers 200-1 to 200-n have functions of binary and dividing (e.g., 1/4).

Next, it is judged whether the counted value TS1b of the counter 201-1 for the cylinder #1 is equal to the reference value RF or not (Step S10), when the counted value TS1b is equal to the reference value RF, it is judged whether the cylinder number is "#n" or not (Step S11). When the cylinder number is not "#n", the cylinder number is counted up ("+1") and the above operations are repeated until the cylinder becomes "#n" (Step S12). Further, when the cylinder number is "#n" at the above Step 11, the operation is returned.

When it is judged that the counted value TS1b for the cylinder #1 is equal to the reference value RF at the above Step S10, the comparison section 203 judges whether the counted value TS1b of the counter 201-1 for the cylinder #1 is more than the reference value RF or not (Step S20). When the counted value TS1b is more than the reference value RF, the difference Ai (DS) between the counted value TS1b and the reference value RF is calculated at the difference calculating section 204 (Step S21), and then the injection amount is decreased in accordance with the difference Ai via the injection amount control section 210 (Step S22), the injection timing is delayed in accordance with the difference Ai via the injection timing control section 220 (Step S23), and further the injection number is decreased via the injection number control section 230 (Step S24).

When it is judged that the counted value TS1b for the cylinder #1 is not more than the reference value RF at the above Step S20, the operation becomes the return.

Thereafter, or when it is judged that the counted value TS1b for the cylinder #1 is not more than the reference value RF at the above Step S20, the comparison section 203 judges whether the counted value TS1b of the counter 201-1 for the cylinder #1 is less than the reference value RF or not (Step S30). When the counted value TS1b is less than the reference value RF, the difference Bi (DS) between the counted value TS1b and the reference value RF is calculated at the difference calculating section 204 (Step S31), and then the injection amount is increased in accordance with the difference Bi via the injection amount control section 210 (Step S32), the injection timing is advanced in accordance with the difference Bi via the injection timing control section 220 (Step S33), and further the injection number is increased via the injection number control section 230 (Step S34).

When it is judged that the counted value TS1b for the cylinder #1 is not less than the reference value RF at the above Step S30, the operation becomes the return.

Then, it is judged whether the cylinder number is "#n" or not (Step S35), the above operation is repeated by counting up ("+1") until the cylinder number becomes "#n".

Thereafter, the correction amount calculating section 205 calculates the correction amount CR with the equation such as " (Ai+Bi) /2" based on the differences Ai and Bi as described above, and corrects the reference value RF such as "(RF-CR) → RF" and sets a new reference value RF.

FIG. 13 is a timing chart showing an example of the operation of the 4-cylinder (#1 ∼ #4) engine, crank angle 180° corresponds to one cylinder as shown in FIG. 13(A), and timing points t1 to t4 show top dead center (TDC) (or bottom dead center BDC)) of respective cylinders #1 ∼ #4. In FIG.13, a state of one rotation of the engine is shown by the crank angle 720° . FIG.13(B) shows the crank angle CS, FIG.13(D) does the turbo signals TS1 to TS4 of the turbo sensors 101A to 101D, and FIG. 13(C) does the divided signals TS1a to TS4 a divided by the dividers 200-1 to 200-4. Further, FIG.13(E) shows the counted values TS1b to TS4b of the counters 201-1 to 201-4, in this embodiment, the counted value TS1b is equal to the reference value RF, the counted value TS2b is less than the same, the counted value TS3b is more than the same and the counted value TS4b is less than the same.

The numeral "#1" in FIG.13(A) is the top dead center of a mechanical position of the first cylinder of the engine, and FIG.13(B) shows the crank angle CS (e.g., 60 pulses/ revolution) from the crank angle sensor 110. The top dead center is generated according to the firing order electrically generated by counting the crank angle CS by 180° , and at least one more check signal is set on the crank angle (θ1) as shown by a dotted line set for each cylinder (FIG.13(A)). The set position (angle) necessary exists between the present top dead centers and a top dead center of the next firing cylinder. In the first embodiment, the integrated value is obtained by pulse-counting the turbo signal as shown in FIG.13(D) between a term θ1 from the top dead center of the cylinder #1 to arbitrary set signal and "θ2" until the top dead center of next firing cylinder #3. This is done at the top dead centers (#1 - #3 - #4 - #2) of respective cylinders. An example of the counted values (triangular waves) in a case that the combustion inter-cylinder differences among the cylinders exist, is shown in FIG.13(E), size of the counted values becomes difference for each cylinder. The combustion inter-cylinder differences are fed back to the injection control factors of the injector for each cylinder so as to coincide with a cylinder (the cylinder #1 in this embodiment, i.e. the reference value RF) arbitrary selected. The target of any one of the injection control factors of the feed back is decided based on the exhaust factors, vibration of the engine or the total torque value of the engine.

The θ1-signal optionally set is used to inspect of the matching of the combustion difference, for example, and it does not necessarily accompany the linear change as shown in FIG.13(E) depending on the plural injections accompanying the pilot injection. That is, the θ1-signal is used in case that the counted value has a curve change or the counted value temporarily decreases, the inspection point may be any one or both of "θ1, θ2".

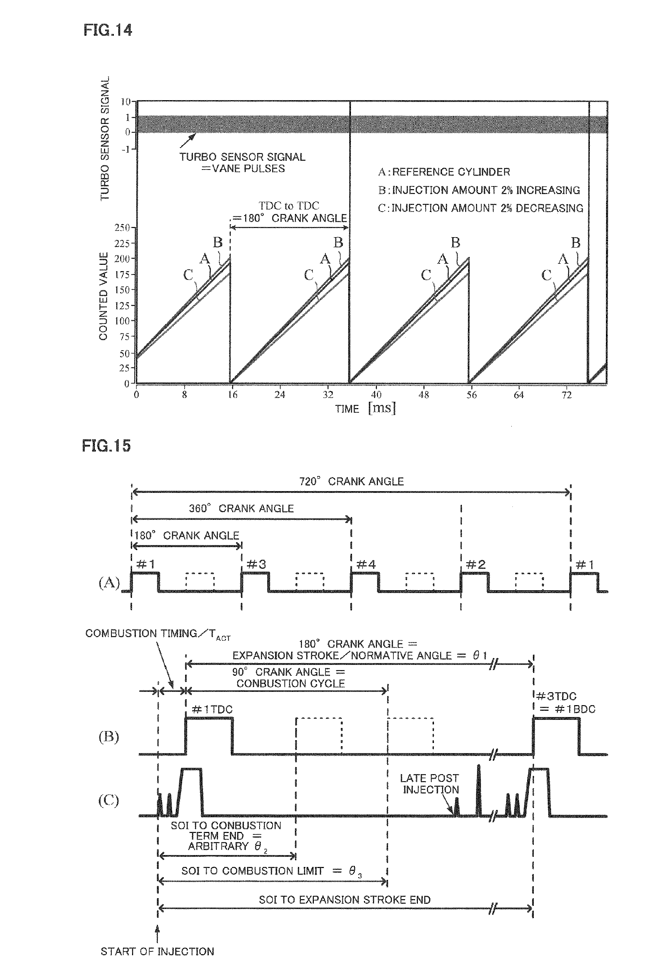

FIG.14 comparably shows a counting characteristic value A of a reference cylinder that the first cylinder #1 is a reference, the counted value B in a case that the injection amount is increased by 2% and the counted value C in a case that the injection amount is decreased by 2%. As the counting characteristic value A shows for the reference cylinder, an injection amount between cylinders is shown with a height of the triangular wave which is integration sum of the counting-up, and it is possible to easily judge the injection difference. Then, it is understood that the inter-cylinder difference correction is possible if the integration sum is fed back to the injection amount.

Moreover, although the counting operation of the turbo sensor signal is started from the top dead center (TDC) in the above embodiments, as shown in FIG.15(A) ∼ (C), an arbitrary signal may be set corresponding to the injection patterns so that the counting operation start from the injection starting time such as a combustion term end time (θ2), after the combustion term end time (θ3), between (start of injection to an expansion stroke end) next TDCs. It is possible to quickly judge whether any injection influence to the inter-cylinder difference in cases that the pilot injection is performed for the purpose of the exhaust regulation and the combustion noise suppression, or the late injection is performed as post processing system.

Although the injection amount is decreased, the injection timing is delayed and the injection number is decreased when the counted value is more than the reference value in the above embodiment, any one control is optionally selected. In similar, although the injection amount is increased, the injection timing is advanced and the injection number is increased when the counted value is less than the reference value in the above embodiment, any one control is also optionally selected. Depending on the engine type, it is impossible to increase/decrease the injection number. Further, in the above embodiment, although first the counted value is more than the reference value and then the counted value is lese than the same, vice versa.

### Explanation of Reference Numerals

- 10: turbocharger
- 20: turbine
- 30: compressor
- 100: crank (gear)
- 130: turbo sensor
- 200: calculating/processing section
- 204: difference calculating section
- 205: correction amount calculating section
- 210: injection amount control section
- 220: injection timing control section
- 230: injection number control section

## Claims

1. An engine control apparatus which comprises plural cylinders, and turbo chargers respectively having compressor sections are provided at said each cylinder, which controls an engine with an ECU (electronic control unit) for engine control,
**characterized by** comprising:
turbo sensors (101A - 10nA) detecting a simultaneous speed or an integrating speed of compressors (101 - 10n) of said compressor sections for said respective cylinders and outputting rotational signals (TS1 - TSn); and
a comparison control section (203, 204, 206, 200-1 - 200-n, 201-1 - 201-n) comparing said simultaneous speed or integrating speed with a reference value (RF) for said respective cylinders and obtaining combustion inter-cylinder differences (JS, TM, JN) of said engine.

2. The engine control apparatus according to claim 1, wherein judgments for said cylinders are performed with a crank angle (CS) from a crank angle sensor (110) connected to a crank shaft (100).

3. The engine control apparatus according to claim 1 or 2, wherein further comprising a control means (210, 220, 230) controls intake system control factors, exhaust system control factors or injection control factors for said engine based on comparison results for said respective cylinders obtained by said comparison control section (203, 204, 206, 200-1 - 200-n, 201-1 - 201-n), and thereby to control so as to decrease or lose said combustion inter-cylinder differences (JS, TM, JN).

4. The engine control apparatus according to claim 3, wherein said injection control factors are at least an injection amount, an injection timing and an injection number.

5. The engine control apparatus according to claim 3 or 4, wherein there is provided a correction section (205) for correcting said reference value (RF) corresponding to a control of said control means (210, 220, 230).

6. An engine control apparatus which comprises plural cylinders, and turbo chargers respectively having compressor sections are provided at said each cylinder, which controls an engine with an ECU (electronic control unit) for engine control,
**characterized by** comprising:
turbo sensors (101A - 10nA) detecting rotational speeds of said compressor sections (101 - 10n) for said respective cylinders and outputting turbo signals (TS1 - TSn);
counters (201-1 - 201-n) counting said turbo signals (TS1 - TSn) for said respective cylinders; and
a comparison control section (203, 204, 206, 200-1 - 200-n, 201-1 - 201-n) comparing counted values of said counters (201-1 - 201-n) with a reference value (RF) for said respective cylinders and controlling at least one factor of injection control factors;
and thereby to control so as to decrease or lose combustion inter-cylinder differences (JS, TM, JN) of said engine.

7. The engine control apparatus according to claim 6, wherein judgments for said cylinders are performed with a crank angle (CS) from a crank angle sensor (110) connected to a crank shaft (100).

8. The engine control apparatus according to claim 6 or 7, wherein said injection control factors are an injection amount, an injection timing and an injection number.

9. The engine control apparatus according to claim 8, wherein said injection amount is decreased when said counted value is greater than said reference value (RF), and said injection amount is increased when said counted value is smaller than said reference value (RF).

10. The engine control apparatus according to claim 8 or 9, wherein said injection timing is delayed when said counted value is greater than said reference value (RF), and said injection timing is advanced when said counted value is smaller than said reference value (RF).

11. The engine control apparatus according to one of claims 8-10, wherein said injection number is decreased when said counted value is greater than said reference value (RF), and said injection number is increased when said counted value is smaller than said reference value (RF).

12. The engine control apparatus according to one of claims 8-11, wherein said injection amount is decreased, said injection timing is delayed and said injection number is decreased when said counted value is greater than said reference value (RF), and said injection amount is increased, said injection timing is advanced and said injection number is increased when said counted value is smaller than said reference value (RF).

13. The engine control apparatus according to any one of claims 6 to 12, wherein there is provided a correction section (205) for respectively calculating differences (DS) between said counted values (TS1b - TSnb) and correcting said reference value (RF) corresponding to said differences (DS).
